# EUROPEAN PATENT APPLICATION

(11) **EP 3 812 169 A1**
(43) Date of publication of application: **28.04.2021**
(21) Application number: 19822230.9
(22) Date of filing: 13.06.2019
(51) Int. Cl.: B60C 9/18, B60C 1/00, B60C 9/20, B60C 9/22

(54) **TIRE**

(30) Priority: 19.06.2018 JP 2018116386
(71) Applicant: Bridgestone Corporation, Chuo-Ku Tokyo 104-8340 (JP)
(72) Inventor: KAMIJO, Tetsushi, Tokyo 104-8340 (JP); ARIMA, Masayuki, Tokyo 104-8340 (JP)
(74) Representative: Oxley, Robin John George
(86) International application number: PCT/JP2019/023512
(87) International publication number: WO 2019/244770

(57) **Abstract**

A tire is provided with a ring-shaped tire case, a belt and a layer. The belt is provided at the outer periphery of the tire case. A resin-covered cord of the belt is formed of a reinforcing cord covered with resin. The resin-covered cord is wound on the outer periphery of the tire case in a helical shape in the tire circumference direction and is joined to the tire case. Portions of the resin-covered cord that are adjacent to one another in the tire axis direction are joined together. The layer is provided at the tire diameter direction outer side of tire axis direction end portion sides of the tire case. A rubber-covered cord of the layer is formed of a fiber cord covered with rubber. The rubber-covered cord is wound on the outer periphery at the tire axis direction end portion sides of the belt in a helical shape in the tire circumference direction. The resin-covered cord and the rubber-covered cord intersect as seen in a tire diameter direction.

## Description

### Technical Field

The present disclosure relates to a tire.

### Background Art

Japanese Patent Application Laid-Open (JP-A) No. 2014-210487 discloses the provision of a belt in which a reinforcing cord member (below referred to as a resin-covered cord) is wound in a helical shape in a tire circumference direction and joined to an outer periphery of a tire skeleton member. The resin-covered cord is formed of reinforcing cords covered with a covering resin.

### SUMMARY OF INVENTION

### Technical Problem

When a resin-covered cord is wound in a helical shape and joined to form a belt as in the conventional technology mentioned above, a layer may be provided on tire axis direction end portions of the belt in order to suppress occurrences of defects at the tire axis direction end portions of the belt. In this layer, a rubber-covered cord in which a fiber cord is covered with rubber is wound in a helical shape to form the layer.

In this structure, during tire ground contact, shear stresses from a tire axis direction inner side end portion of the layer (the rubber-covered cord) act on the resin-covered cord that is disposed at the tire diameter direction inner side of that portion). Therefore, with regard to durability of the tire, there is scope for ingenuity in disposition of the rubber-covered cord constituting the layer.

An object of the present disclosure is to improve durability of a tire that includes a belt formed by winding a resin-covered cord in a helical shape.

### Solution to Problem

A tire according to the present disclosure includes a ring-shaped tire skeleton member, a belt in which a resin-covered cord is wound in a helical shape in a tire circumference direction at an outer periphery of the tire skeleton member and is joined to the tire skeleton member, portions of the resin-covered cord that are adjacent to one another in a tire axis direction being joined to one another, and the resin-covered cord being formed of a reinforcing cord covered with a covering resin, and a layer in which a long and narrow cord member is wound in a helical shape in the tire circumference direction at an outer periphery of a tire axis direction end portion of the belt, wherein the resin-covered cord and the cord member intersect as seen in a tire diameter direction.

In this tire, the belt is formed by winding the resin-covered cord in the helical shape on the outer periphery (the tire diameter direction outer side) of the tire skeleton member, joining the resin-covered cord to the tire skeleton member, and joining adjacent windings of the resin-covered cord to one another. The layer is formed at the outer periphery (the tire diameter direction outer side) of the tire axis direction end portion of the belt. The layer is formed by winding the long and narrow cord member on the belt in a helical shape and joining the cord member to the belt.

In this tire, because the layer is provided at the tire diameter direction outer side of the tire axis direction outer side end portion side of the belt, on which maximum tension loads act during ground contact, occurrences of defects at the tire diameter direction outer side end portion of the belt may be prevented or suppressed. Thus, a mutual joining strength of the resin-covered cord in at least the tire axis direction outer side end portion of the belt may be improved by the rubber-covered cord being disposed at the tire diameter direction outer side of that region of the belt.

However, when a layer (cord member) is wound on a belt in a helical shape as in this tire, shear stresses act on the resin-covered cord along a tire axis direction inner side end portion of the layer (the cord member) during tire ground contact. In particular, if a direction of extension of the cord member and a direction of extension of the resin-covered cord match (are parallel) as seen in a tire diameter direction, shear stresses may be concentrated along the resin-covered cord (the reinforcing cord).

In contrast, in the present tire, the resin-covered cord and the cord member are disposed to intersect as seen in the tire diameter direction. Therefore, concentration along the resin-covered cord (reinforcing cord) of shear stresses acting on the resin-covered cord from a tire axis direction end portion of the layer during tire ground contact is moderated. As a result, durability of the tire is improved.

### Advantageous Effects of Invention

According to the present disclosure, durability of a tire that includes a belt formed by winding a resin-covered cord in a helical shape may be improved.

### BRIEF DESCRIPTION OF DRAWINGS

Fig. 1 is a tire diameter direction sectional diagram showing a tire according to a first exemplary embodiment.
Fig. 2 is a tire diameter direction view showing a layered state of a belt and layer in the tire according to the first exemplary embodiment.
Fig. 3 is a tire diameter direction sectional diagram showing a tire according to a second exemplary embodiment.
Fig. 4 is a tire diameter direction view showing a layered state of a belt and layer in the tire according to the second exemplary embodiment.
Fig. 5 is a tire diameter direction sectional diagram showing a tire according to a third exemplary embodiment.
Fig. 6 is a tire diameter direction view showing a layered state of a belt and layer in the tire according to the third exemplary embodiment.
Fig. 7 is a tire diameter direction view showing a layered state of a belt and layer in a tire according to an alternative example.

### DETAILED DESCRIPTION

### = First Exemplary Embodiment =

Below, a first exemplary embodiment of the present invention is described in accordance with the drawings. In the drawings, a tire circumference direction is indicated by arrow S, a tire axis direction (which may also be referred to as the tire width direction) is indicated by arrow W, and a tire diameter direction is indicated by arrow R. The meaning of the term "tire width direction" is intended to include directions parallel to a tire rotation axis.

A side in the tire width direction that is further from a tire equator plane CL is described as "the tire width direction outer side", and a side in the tire width direction that is closer to the tire equator plane CL is described as "the tire width direction inner side". A side in the tire diameter direction that is further from the tire axis is referred to as "the tire diameter direction outer side", and a side in the tire diameter direction that is closer to the tire axis is referred to as "the tire diameter direction inner side".

Methods of measuring dimensions of respective parts are the methods described in the 2016 edition of the JATMA YEAR BOOK. A usage site or production site complies with the respective standards when the TRA (Tire and Rim Association) standards and the ETRTO (European Tire and Rim Technical Organisation) standards are applied.

### - Tire -

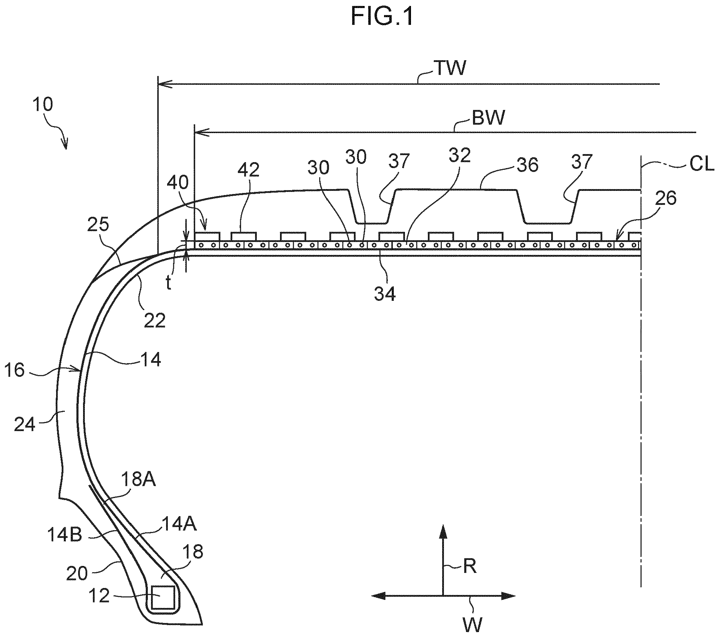

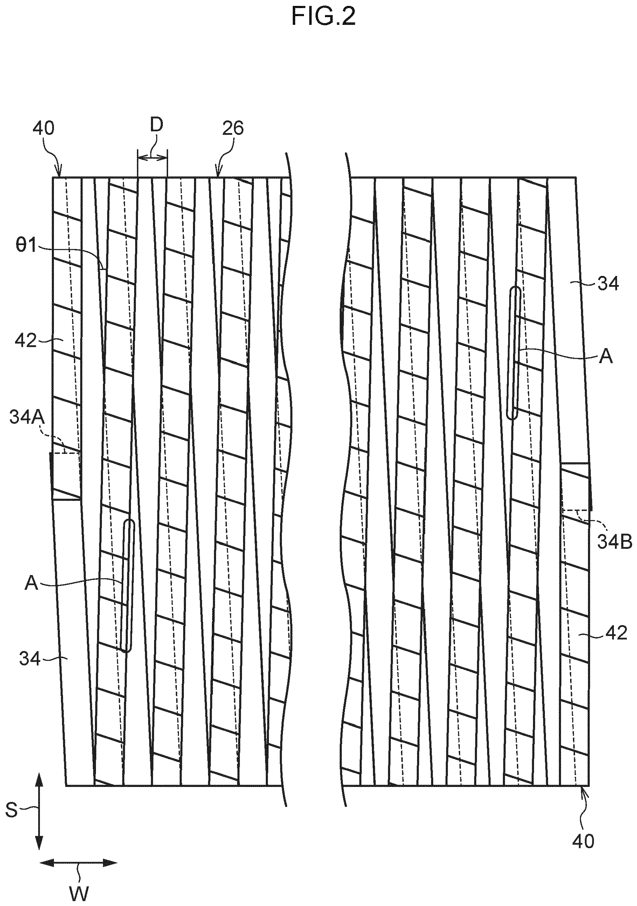

A pneumatic tire 10 according to the exemplary embodiment of the present invention is described using Fig. 1 and Fig. 2.

As shown in Fig. 1, the pneumatic tire 10 according to the present exemplary embodiment is, for example, a "radial tire" to be used on a car. The pneumatic tire 10 is provided with a pair of bead portions 20 in which bead cores 12 are embedded. A carcass 16 formed of a single-layer carcass ply 14 spanning between one of the bead portions 20 and the other of the bead portions 20 (which is not shown in the drawings). Fig. 1 shows a shape of the pneumatic tire 10 in a natural state prior to being filled with air.

The carcass ply 14 is formed by covering plural cords (not shown in the drawings) that extend in a radial direction of the pneumatic tire 10 with a coating rubber (not shown in the drawings). Thus, the pneumatic tire 10 according to the present exemplary embodiment is what is known as a radial tire. A material of the cords of the carcass ply 14 is, for example, PET but may be an alternative conventional, publicly known material.

Tire axis direction end portions of the carcass ply 14 are folded back toward the tire diameter direction outer sides around the bead cores 12. A portion of the carcass ply 14 that extends from the one bead core 12 to the other bead core 12 (which is not shown in the drawings) is referred to as a main body portion 14A, and portions of the carcass ply 14 that are folded back from the bead cores 12 are referred to as folded-back portions 14B.

A bead filler 18 whose thickness tapers toward the tire diameter direction outer side from each bead core 12 is disposed between the main body portion 14A and the folded-back portion 14B. Portions of the pneumatic tire 10 at the tire diameter direction inner side relative to tire diameter direction outer side ends 18A of the bead fillers 18 serve as the bead portions 20.

An inner liner 22 formed of a rubber is disposed at the tire inner side of the carcass 16. A side rubber layer 24 formed of a first rubber material is disposed at each tire width direction outer side of the carcass 16.

In the present exemplary embodiment, a tire case 25 is constituted by the bead cores 12, the carcass 16, the bead fillers 18, the inner liner 22 and the side rubber layers 24. In other words, the tire case 25 is a tire skeleton member forming a skeleton of the pneumatic tire 10.

### - Belt -

A belt 26 is disposed at the outer side of a crown portion of the carcass 16, that is, at the tire diameter direction outer side of the carcass 16. The belt 26 is in area contact with an outer periphery face of the carcass 16. The belt 26 is formed by winding on a resin-covered cord 34. In the resin-covered cord 34, a plural number (two in the present exemplary embodiment) of reinforcing cords 30 are covered with a resin 32. The resin 32 corresponds to a "covering resin".

It is preferable if the cords employed as the reinforcing cords 30 of the belt 26 are thicker and greater in strength (tensile strength) than the cords of the carcass ply 14. The reinforcing cords 30 of the belt 26 may be constituted of monofilaments (single fibers) of metal fiber, organic fiber or the like, or of multifilaments (twisted fibers) in which these fibers are twisted. The reinforcing cords 30 according to the present exemplary embodiment are steel cords. The reinforcing cords 30 that are employed may be, for example, "1×5" steel cords with a diameter of 0.225 mm; steel cords with alternative conventional, publicly known constitutions may be employed.

A resin material employed for the resin 32 covering the reinforcing cords 30 is a resin material with a higher tensile modulus of elasticity than the rubber constituting the side rubber layer 24 and a second rubber material constituting a tread 36, which is described below. A thermoplastic resin, thermoplastic elastomer (TPE), thermosetting resin or the like featuring resilience may be employed as the resin 32 covering the reinforcing cords 30. In consideration of resilience during running and moldability during fabrication, it is desirable to employ a thermoplastic elastomer.

Thermoplastic elastomers that can be mentioned include polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), dynamically vulcanized thermoplastic elastomers (TPV), and the like.

Thermoplastic resins that can be mentioned include polyurethane resins, polyolefin resins, vinyl chloride resins, polyamide resins, and the like. For example, a thermoplastic resin material that may be employed has a deflection temperature under load (0.45 MPa load) as defined in ISO 75-2 or ASTM D648 of at least 78°C, a tensile yield strength as defined in JIS K7113 of at least 10 MPa, a tensile elongation at break as defined in JIS K7113 of at least 50%, and a Vicat softening temperature as defined in JIS K7206 (method A) of at least 130°C.

It is preferable if the tensile modulus of elasticity of the resin 32 covering the reinforcing cords 30 as defined in JIS K7113:1995 is at least 100 MPa. It is also preferable if an upper limit of the tensile modulus of elasticity of the resin 32 covering the reinforcing cords 30 is not more than 1000 MPa. It is particularly preferable if the tensile modulus of elasticity of the resin 32 covering the reinforcing cords 30 is within the range 200 to 700 MPa.

As illustrated in Fig. 1, a thickness dimension t of the belt 26 according to the present exemplary embodiment is preferably greater than a diameter dimension of the reinforcing cords 30. That is, it is preferable if the reinforcing cords 30 are completely embedded in the resin 32. When the pneumatic tire 10 is for use on a car, it is preferable if the thickness dimension t of the belt 26 is, to be specific, at least 0.70 mm.

A layer 40 is formed at the diameter direction outer side of the belt 26. In the layer 40, rubber-covered cords 42 are arranged in helical shapes on the belt 26. In each rubber-covered cord 42, the outside of a fiber cord (not shown in the drawings) is covered with a rubber. The rubber-covered cord 42 corresponds to "a cord member".

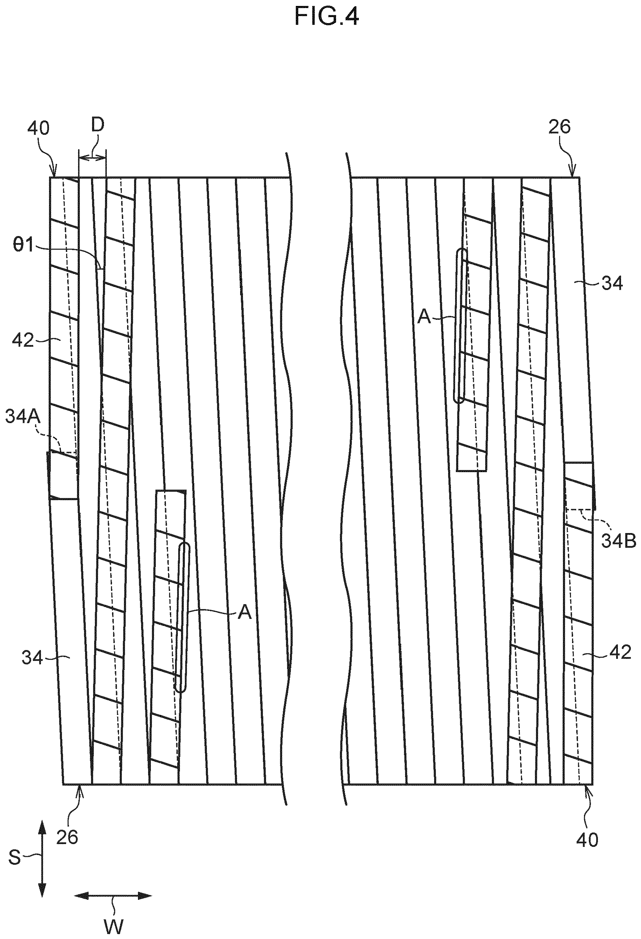

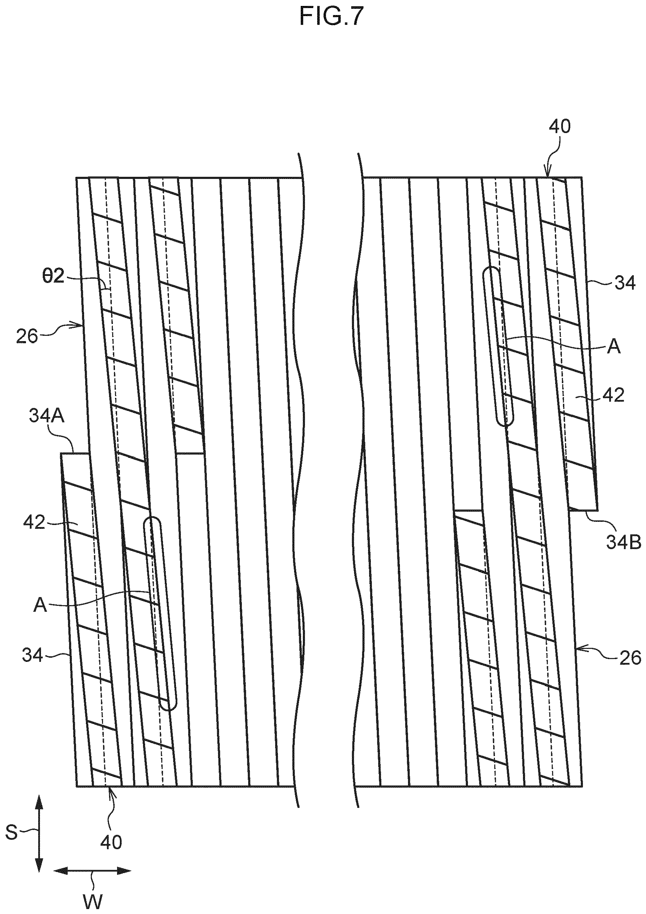

As shown in Fig. 2, the rubber-covered cords 42 are wound onto the belt 26 (the resin-covered cord 34) that is arranged in a helical shape on the carcass, from an upper portion of a tire axis direction one end portion 34A of the resin-covered cord 34 to an upper portion of a tire axis direction other end portion 34B of the resin-covered cord 34. The rubber-covered cords 42 are wound in the opposite direction to the resin-covered cord 34. In Fig. 2, hatching is applied to the rubber-covered cords 42 disposed on the resin-covered cord 34 in order to facilitate understanding. The same applies in Fig. 4, Fig. 6 and Fig. 7, which are mentioned below.

That is, as seen in a tire diameter direction. as illustrated in Fig. 2, the resin-covered cord 34 is angled from the tire circumference direction toward the side at which the tire axis direction one end portion is disposed, and the rubber-covered cords 42 are angled from the tire circumference direction toward the side at which the tire axis direction other end portion is disposed.

Thus, as seen in the tire diameter direction, an intersection angle θ1 is formed by the resin-covered cord 34 and each rubber-covered cord 42.

The rubber-covered cords 42 constituting the layer 40 are arranged with rubber-covered cords that are adjacent in the tire axis direction spaced apart at a predetermined distance. That is, a plural number of the rubber-covered cords 42 are wound on in the helical shape with gaps of a distance D in the tire axis direction formed therebetween.

As shown in Fig. 1, the tread 36 formed of the second rubber material is disposed at the tire diameter direction outer side of the layer 40. The second rubber material that is employed for the tread 36 may be a conventional common, publicly known rubber material. Grooves 37 for drainage are formed in the tread 36. A pattern of the tread 36 that is employed may be a conventional common, publicly known pattern.

It is preferable if a width BW of the belt 26 measured along the tire axis direction is at least 75% of a contact patch width TW of the tread 36 measured along the tire axis direction. A preferable upper limit of the width BW of the belt 26 is 110% of the contact patch width TW.

The contact patch width TW of the tread 36 is a region that is loaded in accordance with a maximum load performance when the pneumatic tire 10 is mounted to a standard rim complying with the JATMA YEAR BOOK (from the Japan Automobile Tire Manufacturers Association, 2018 edition), filled to an internal pressure of 100% of an air pressure (a maximum air pressure) corresponding with the maximum load performance (the bold-text load in the table of internal pressure against load performance) in the JATMA YEAR BOOK for the employed size and ply rating, and disposed such that the rotation axis thereof is parallel with a horizontal plate in a stable state. A usage site or production site complies with the respective standards when the TRA standards and the ETRTO standards are applied.

In-plane shear stiffness of the belt 26 is preferably higher than an in-plane shear stiffness of a belt formed with a rubber covering.

### - Operation and Effects -

Now, operation and effects of the pneumatic tire 10 according to the present exemplary embodiment are described.

In the pneumatic tire 10 according to the present exemplary embodiment, the belt 26 is formed by the resin-covered cord 34 being wound on in the helical shape and windings of the resin-covered cord 34 that are adjacent in the tire axis direction being joined together. Because the layer 40 is provided at the tire diameter direction outer side of the belt 26, joining strength between the windings of the resin-covered cord 34 is improved.

In particular, because the layer 40 is formed over an entire range of the belt 26 in the tire axis direction, joining strength between the windings of the resin-covered cord 34 is further improved in an entire range in a tire axis direction of the belt 26.

During ground contact of the pneumatic tire 10, shear stresses act on portions of the resin-covered cord 34 that are disposed at tire axis direction inner side end portions of the rubber-covered cords 42 constituting the layer 40, for example, at the tire diameter direction inner side of a region A of the rubber-covered cords 42.

However, the resin-covered cord 34 (the reinforcing cords 30) and each rubber-covered cord 42 are formed so as to be angled to respectively opposite sides from the tire circumference direction as seen in the tire diameter direction. Thus, the resin-covered cord 34 and rubber-covered cord 42 are disposed so as to intersect at the intersection angle θ1.

That is, compared to a structure in which inclination angles of the resin-covered cord 34 and the rubber-covered cord 42 relative to the tire circumference direction match (a structure in which the intersection angle is 0°), concentrations of shear stress from tire axis direction end portions of the rubber-covered cord 42 that act on portions of the resin-covered cord 34 disposed at the tire diameter direction inner side thereof are moderated (the shear stresses are dispersed), in addition to which the joining strength between windings of the resin-covered cord 34 is improved.

Further, the rubber-covered cords 42 constituting the layer 40 are wound onto the belt 26 with the predetermined spacing formed between the rubber-covered cords 42 that are adjacent in the tire axis direction (below referred to as "gap winding"). Consequently, compared to a structure in which each rubber-covered cord is abutted against a rubber-covered cord that is adjacent in the tire axis direction (below referred to as "continuous winding"), it is easier to apply a large angle relative to the tire circumference direction as seen in the tire diameter direction during helical winding. As a result, when the resin-covered cord 34 and the rubber-covered cords 42 are arranged in the opposite directions towards opposite sides of the tire circumference direction, the intersection angle θ1 may be increased.

Consequently, concentrations of shear stress from the tire axis direction end portions of the rubber-covered cords 42 that act on portions of the resin-covered cord 34 disposed at the tire diameter direction inner side thereof are further moderated (the shear stresses are dispersed), in addition to which the joining strength between windings of the resin-covered cord 34 is further improved.

Because the rubber-covered cords 42 are wound by gap winding, a usage amount of the layer 40 (the rubber-covered cords 42), which is to say an amount of material that is used, is suppressed compared to a structure wound by continuous winding, and the pneumatic tire 10 is reduced in weight.

Because the layer 40 (the rubber-covered cords 42) is disposed on a tire axis direction central portion of the belt 26 (a vicinity of the tire equator plane CL), the layer 40 is excellent in "ride-over" performance.

Because of hoop effect due to the layer 40 (the rubber-covered cords 42) being provided over the entire range in the tire axis direction of the belt 26, steering stability of a car at which the pneumatic tire 10 is mounted is excellent.

Meanwhile, because the rubber-covered cords 42 of the layer 40 are wound by gap winding, hoop effect affecting the belt 26 is suppressed compared to a structure wound by continuous winding. Thus, a deterioration in riding comfort of a car at which the pneumatic tire 10 is mounted is suppressed.

In the pneumatic tire 10, because the belt 26 has a single-layer structure, the thickness of the belt 26 may be reduced compared to a conventional structure with two or more belt plies. Thus, thickness of the tread 36 may be increased by a corresponding amount, and depths of the grooves 37 may be increased. As a result, a lifespan of the pneumatic tire 10 may be extended.

In the belt 26 of the pneumatic tire 10, the reinforcing cords 30 are wound in helical shapes and there are no regions of the circumference in which the reinforcing cords 30 are superposed in the tire diameter direction. Thus, the thickness of the belt 26 is uniform in the tire circumferential direction, and uniformity of the pneumatic tire 10 is excellent.

If the thickness t of the belt 26, which is to say the thickness of the resin 32, were less than 0.7 mm, it might not be possible to make the reinforcing cords 30 embedded in the resin 32 thick and provide the hoop effect.

If the thickness BW of the belt 26 were less than 75% of the contact patch width TW of the tread 36, the hoop effect of the belt 26 might be insufficient, and it might be difficult to suppress the generation of noise in the vicinity of the shoulder 39. Alternatively, if the thickness BW of the belt 26 were greater than 100% of the contact patch width TW of the tread 36, the hoop effect would plateau and the belt 26 would be wider than necessary, leading to an increase in weight of the pneumatic tire 10.

In the pneumatic tire 10 according to the present exemplary embodiment, because the crown portion of the carcass 16 is reinforced by the belt 26 in which the reinforcing cords 30 wound in the helical shape are covered with the resin 32, weight may be reduced compared to a belt of a conventional tire that is formed of plural layers constituted with two or more belt plies, and fabrication is simpler.

In the belt 26 according to the present exemplary embodiment, the tensile modulus of elasticity of the resin 32 covering the reinforcing cords 30 is at least 100 MPa, and the thickness of the belt 26 is assured of being at least 0.7 mm. Therefore, the in-plane shear stiffness of the belt 26 in the tire axis direction may be thoroughly assured.

Because the in-plane shear stiffness of the belt 26 is assured, sufficient lateral force may be generated when a slip angle is applied to the pneumatic tire 10. Therefore, steering stability may be assured and responsiveness may be improved.

In addition, out-of-plane shear stiffness of the belt 26 is assured. Therefore, when a large lateral force is applied to the pneumatic tire 10, buckling of the tread 36 (a phenomenon in which the surface of the tread 36 undulates and a portion of the tread 36 separates from the ground) may be suppressed.

In the pneumatic tire 10 according to the present exemplary embodiment, because the belt 26 with high in-plane shear stiffness is employed and the width BW of the belt 26 is at least 75% of the contact patch width TW of the tread 36, stiffness of the vicinity of the shoulder 39 may be raised.

### = Second Exemplary Embodiment =

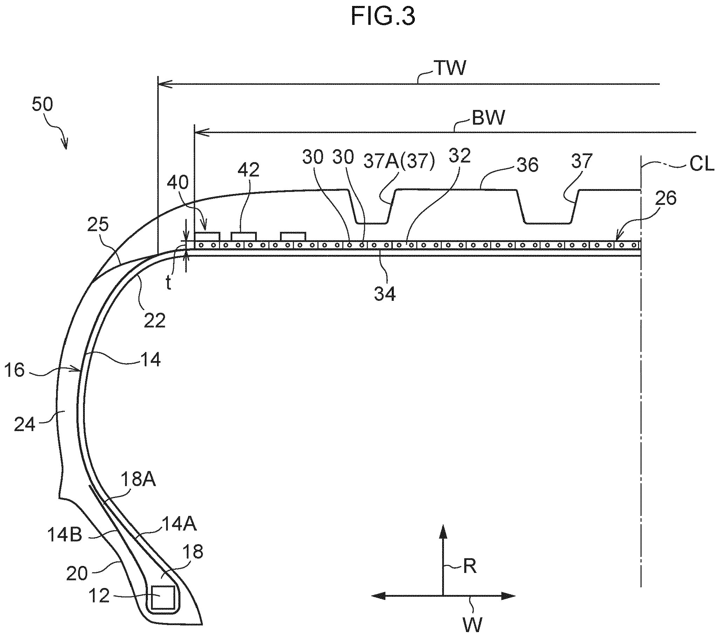

A pneumatic tire according to a second exemplary embodiment of the present invention is described with reference to Fig. 3 and Fig. 4. Structural elements that are the same as in the first exemplary embodiment are assigned the same reference symbols. Details thereof, including operational effects, are not described here.

As shown in Fig. 3 and Fig. 4, in a pneumatic tire 50, the layer 40 (the rubber-covered cords 42) is formed by gap winding at the tire diameter direction outer side only of both tire axis direction end portions of the belt 26. That is, the rubber-covered cords 42 are formed only at the two tire axis direction end portions of the belt 26 (the resin-covered cord 34).

The meaning of the term "tire axis direction end portions of the belt 26" as used herein is intended to include a range from a tire axis direction end portion of the belt 26 to a groove 37A that is closest to the tire axis direction outer (end portion) side. The meaning of "the layer 40 is formed ... at the ... tire axis direction end portions of the belt 26" as used herein is intended to include formation of the layer 40 in a portion of this range.

Operation of the pneumatic tire 50 is described.

During ground contact of the pneumatic tire 50, the greatest tensile loads act on the two tire axis direction end portions of the belt 26. Therefore, the belt 26 (the resin-covered cord 34) may be reinforced, as in the pneumatic tire 50, by disposing the layer 40 (the rubber-covered cords 42) only on the tire axis direction end portions of the belt 26 (the resin-covered cord 34) at which the greatest tensile loads act during ground contact. Consequently, joining strength between windings of the resin-covered cord may be improved at the two tire axis direction end portions of the belt 26 at which the greatest tensile loads act during tire ground contact.

Meanwhile, because the layer 40 (the rubber-covered cords 42) is not disposed at the tire diameter direction outer side of the tire axis direction inner side of the belt 26 (the side at which the tire equator plane CL is disposed), excessive hoop effect of the belt 26 is suppressed, and riding comfort of a car at which the pneumatic tire 50 is mounted may be improved.

Moreover, because the layer 40 (the rubber-covered cords 42) is not disposed at the tire diameter direction outer side of a tire axis direction inner side region of the belt 26, the pneumatic tire 50 may be reduced in weight, in addition to which a usage amount of the layer 40 (the rubber-covered cords 42) may be restrained.

As seen in a tire diameter direction of the pneumatic tire 50, the resin-covered cord 34 and the rubber-covered cords 42 are disposed to be angled to mutually opposite sides relative to the tire circumference direction (at the intersection angle θ1). Therefore, compared to a structure in which the inclination angles match (a structure in which the intersection angle is 0°), concentrations of shear stress from tire axis direction end portions of the rubber-covered cords 42 that act on portions of the resin-covered cord 34 disposed at the tire diameter direction inner side thereof are moderated (the shear stresses are dispersed), in addition to which the joining strength between windings of the resin-covered cord 34 is improved.

### = Third Exemplary Embodiment =

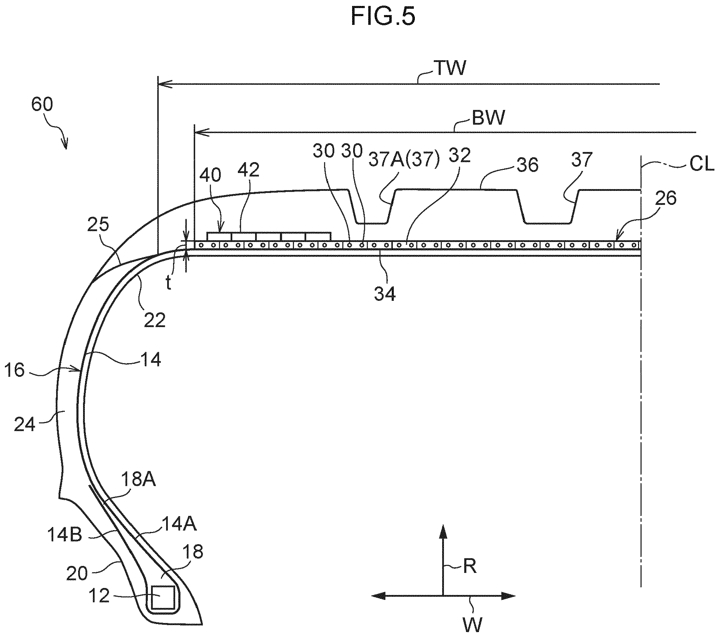

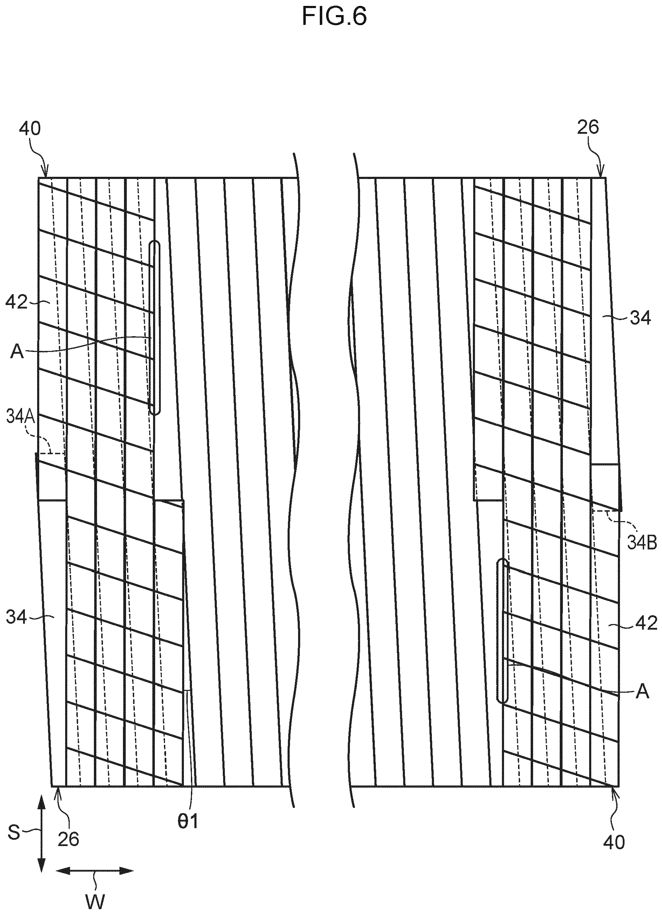

A pneumatic tire according to a third exemplary embodiment of the present invention is described with reference to Fig. 5 and Fig. 6. Structural elements that are the same as in the first exemplary embodiment are assigned the same reference symbols. Details thereof, including operational effects, are not described here.

Similarly to the pneumatic tire 50 according to the second exemplary embodiment, in a pneumatic tire 60, the layer 40 is formed only at both tire axis direction end portions of the belt 26. However, the rubber-covered cords 42 constituting the layer 40 are wound by continuous winding.

Now, operation of the pneumatic tire 60 is described. Because the layer 40 is provided on the two tire axis direction end portions of the belt 26 (at the tire diameter direction outer side of the two end portions), at which the greatest tensile loads act during ground contact, the joining strength between windings of the resin-covered cord 34 is highest at the two tire axis direction end portions of the belt 26. Thus, because the joining strength between the windings of the resin-covered cord 34 at the two tire axis direction end portions of the belt 26 is highest where the greatest tensile forces act during ground contact, durability of the pneumatic tire 60 is improved.

In particular, because the rubber-covered cords 42 constituting the layer 40 are disposed without gaps in the tire axis direction and are joined to one another, the hoop effect is enhanced and the joining strength between the resin-covered cords is further improved.

Meanwhile, because the layer 40 is not present at the tire axis direction inner side of the belt 26, excessive hoop effect in the pneumatic tire 60 is suppressed, and riding comfort of a car at which the pneumatic tire 60 is mounted may be excellent.

### - Alternatives -

In these exemplary embodiments, the resin-covered cord 34 and the rubber-covered cords 42 are angled towards opposite sides of the tire circumference direction as seen in the tire diameter direction, but this is not limiting.

That is, it is sufficient that the resin-covered cord 34 and the rubber-covered cords 42 intersect as seen in the tire diameter direction. For example, even if the resin-covered cord 34 and the rubber-covered cords 42 are angled to the same direction in the tire axis direction (towards one side) from the tire circumference direction, provided an intersection angle θ2 is formed, concentrations of stress acting on portions of the resin-covered cord 34 from tire axis direction inner side end portions of the rubber-covered cords 42 may be moderated. Thus, the joining strength between windings of the resin-covered cord 34 may be improved, and tire durability may be enhanced.

Further, the number of reinforcing cords 30 covered by the resin 32 is not limited to two but may be three or more. The number of reinforcing cords 30 covered by the resin 32 may also be one.

The layer 40 is described as being the rubber-covered cords 42 but this is not limiting. For example, the layer 40 may be formed of fiber cords covered with a resin.

The disclosures of Japanese Patent Application No. 2018-116386 filed June 19, 2018 are incorporated into the present specification by reference in their entirety.

All references, patent applications and technical specifications cited in the present specification are incorporated by reference into the present specification to the same extent as if the individual references, patent applications and technical specifications were specifically and individually recited as being incorporated by reference.

## Claims

1. A tire comprising:
a ring-shaped tire skeleton member;
a belt, in which a resin-covered cord is wound in a helical shape in a tire circumference direction at an outer periphery of the tire skeleton member and is joined to the tire skeleton member, portions of the resin-covered cord that are adjacent to one another in a tire axis direction being joined to one another, and the resin-covered cord being formed of a reinforcing cord covered with a covering resin; and
a layer in which a long and narrow cord member is wound in a helical shape in the tire circumference direction at an outer periphery of a tire axis direction end portion of the belt,
wherein the resin-covered cord and the cord member intersect as seen in a tire diameter direction.

2. The tire according to claim 1, wherein the cord member is wound in the helical shape with portions of the cord member that are adjacent in the tire axis direction being spaced apart.

3. The tire according to claim 1 or claim 2, wherein the cord member extends over an entire range in a tire axis direction of the belt.

4. The tire according to any one of claims 1 to 3 wherein, as seen in the tire diameter direction, the resin-covered cord and the cord member are angled in mutually opposite directions relative to the tire circumference direction.
